# EUROPEAN PATENT APPLICATION

(11) **EP 0 692 298 A1**
(43) Date of publication of application: **17.01.1996**
(21) Application number: 95304208.2
(22) Date of filing: 16.06.1995
(51) Int. Cl.: B01D 53/50

(54) **Sulphur dioxide removal from flue gas**

(30) Priority: 28.06.1994 US 19940267263
(71) Applicant: THE BABCOCK & WILCOX COMPANY, New Orleans, Louisiana 70160-0035 (US)
(72) Inventor: Johnson, Dennis W., Barberton, Ohio 44203 (US); Baht, Pervaje A., North Canton, Ohio 44720 (US)
(74) Representative: Pilch, Adam John Michael, et al

(57) **Abstract**

A combined regenerative scrubber and condensing heat exchanger system (40) comprises a housing (32) having an inlet (33) and an outlet (34) for channelling flue gas (2) into and out of the housing (32). A first heat exchanger (42) is located in the housing (32) for contacting a downward flow of the flue gas for providing initial cooling of the flue gas. The flue gas is channelled through a second heat exchanger (44) in an upward direction for providing further cooling of the flue gas. A reagent scrubbing spray device (52) is used to spray reagent (49) into the flue gas as well as onto the second heat exchanger (44) for removing sulphur dioxide from the flue gas and for cleaning the second heat exchanger (44). A regeneration device (46) is used to regenerate reagent (51) from the reaction produce (47) as well as to recover sulphur dioxide from the reaction product (47).

## Description

The present invention relates, in general, to the removal of contaminants from flue gas, and in particular to systems and methods for removing sulphur dioxide from a heat exchanger in a regenerative scrubber system.

There are several known systems used for removing contaminants from flue gas. Many of these systems which pertain to the removal of sulphur oxides and other contaminants are disclosed in "Power Magazine" published in May 1993. In these arrangements, slurry-based sorbent is employed in a once-through system in order to remove sulphur oxides, particulates and mercury from flue gases; the reaction products are then drained for discharge treatment.

There are also a number of known regenerable processes used for flue gas desulphurization. These include sodium based systems such as SOXAL (trademark owned by Allied Corporation, AQUATECH Systems), the Wellman-Lord process, the citrate process, and the MgO process. Wet regenerable processes generally have an absorption step in which fresh or regenerated reagent is reacted with sulphur dioxide (SO₂) in order to clean the flue gas. The products of the SO₂ absorption reaction are then sent to a regeneration system which generally involves the addition of heat to produce an SO₂ rich gas that can be further treated to produce sulphur, sulphuric acid or SO₂. The reagent is regenerated for reuse in the SO₂ absorption process. For a sodium scrubber, the general reactions involved are:

NA₂CO₃ + 2NaHSO₃ → CO₂↑ + NA₂SO₃ + H₂O, make-up (1)

Na₂SO₃ + SO₂ + H₂O → 2NaHSO₃, absorption (2)

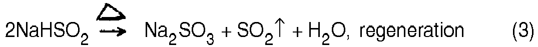

The regeneration for these processes is complicated and consumes a large amount of energy.

Similar systems, known as dual-alkali processes, use one reagent (generally sodium carbonate/sodium sulphite) to absorb SO₂. The product of this reaction (sodium bisulphite) is then reacted with lime or limestone to form calcium sulphite and calcium sulphate in order to regenerate the reagent. These dual-alkali processes produce a sludge that must be landfilled or converted to a useful form. The reactions for the dual alkali process using limestone and lime are shown in the following reactions:

2NaHSO₃(aq) + CaCO₃ → 1/2 H₂O + CaSO₃ · 1/2 H₂O↓ + CO₂↑ + Na₂SO₃(aq) (4)

2NaHSO₃(aq) + Ca(OH)₂ → Na₂SO₃(aq) + 3/2 H₂O + CaSO₃ · 1/2 H₂O (5)

Non-regenerated flue gas desulphurization (FGD) systems are generally calcium based. In these systems, lime or limestone is reacted with SO₂. The end product is often a sludge similar to that produced by dual-alkali systems.

According to one aspect of the invention there is provided a system for removing sulphur dioxide from a flue gas, the system comprising:
a housing having an inlet and an outlet for channelling the flue gas into and out of the housing;
first heat exchanger means in the housing near the inlet for contacting a downward flow of the flue gas in order to cool the flue gas;
second heat exchange means in the housing near the outlet for contacting an upward flow of the flue gas in order to further cool the flue gas;
reagent scrubbing means for removing sulphur dioxide from the flue gas with a reagent in order to form a reaction product; and
regeneration means for regenerating the reagent from the reaction product for use in the reagent scrubbing means and for recovering the sulphur dioxide from the reaction product.

According to another aspect of the invention there is provided a method of removing sulphur dioxide from a flue gas, the method comprising the steps of:
providing a housing having an inlet and an outlet;
channelling the flue gas into the housing through the inlet;
downwardly channelling the flue gas to the housing near first heat exchanger means for cooling the flue gas;
upwardly channelling the flue gas in the housing near second heat exchanger means for further cooling the flue gas;
providing a reagent to the flue gas in the housing for removing sulphur dioxide from the flue gas by forming a reaction product;
providing the reagent to at least one of the heat exchanger means;
regenerating the reagent from the reaction product;
recovering the sulphur dioxide as a by-product; and
channelling the flue gas through the outlet.

A preferred embodiment of this invention provides a regenerative type scrubber that is integrated with a condensing heat exchanger (CHX : registered trade mark). The preferred system can remove SO₂ from a Teflon (registered trade mark) coated tube heat exchanger using a scrubbing solution essentially without suspended solids and for regenerating alkali for make-up. By-product SO₂ is recovered and further processed to market higher concentrate SO₂, sulphur or sulphuric acid.

In the preferred embodiment, the flue gas is channelled downwardly through the housing through the first condensing heat exchanger which contacts the downward flow of flue gas in order to cool the flue gas. The flue gas is then channelled to the second condensing heat exchanger in an upward direction within the housing for providing further cooling of the flue gas. A reagent scrubbing spray device is utilized for spraying the flue gas in order to remove sulphur dioxide from the flue gas by forming a reaction product. The reagent is also sprayed on at least one of the condensing heat exchangers, preferably, the second heat exchanger. A regeneration system is used for regenerating the reagent from the reaction product for reuse in the reagent scrubbing device. Sulphur dioxide is also recovered from the reaction product for other uses.

The invention will now be described by way of example with reference to the accompanying drawings, throughout which like parts are referred to by like references, and in which:
Figure 1 is a schematic view illustrating a known regeneration process for the desulphurization of flue gas;
Figure 2 is a schematic view illustrating a second known regeneration process for the desulphurization of flue gas; and
Figure 3 is a schematic view illustrating a regenerable scrubber and heat exchanger system according to an embodiment of the present invention.

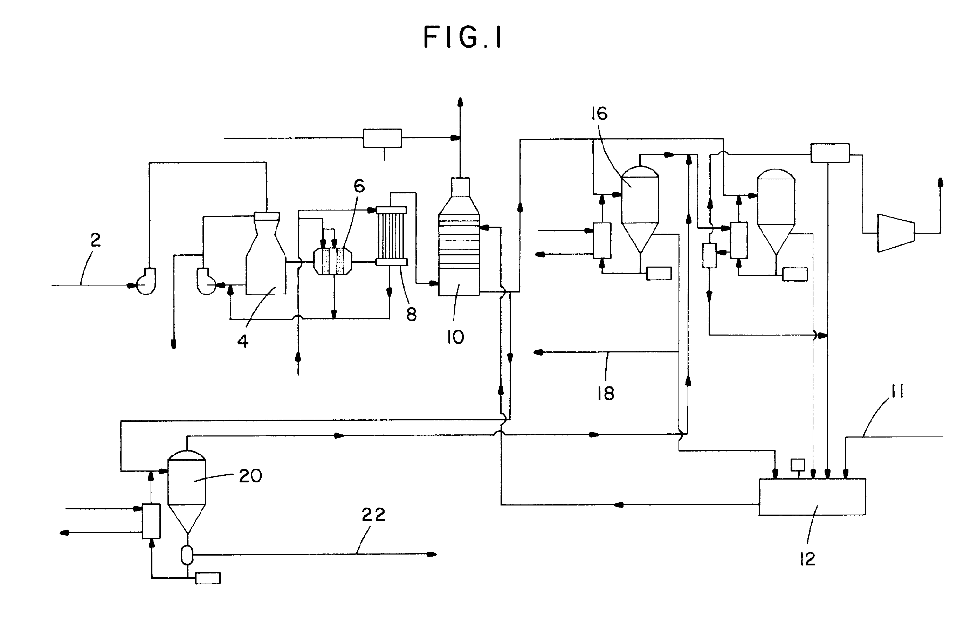

Figure 1 illustrates a known regenerative flue gas desulphurization process, commonly known as the Wellman-Lord process. This system channels incoming flue gas 2 into a scrubber reactor 4 for scrubbing the flue gas. After scrubbing, the flue gas 2 is channelled through a mist eliminator 6 which demists the flue gas 2. A precipitator 8, such as a wet electrostatic precipitator, is used to electrostatically remove remaining particles from the flue gas 2, after which the flue gas 2 is channelled to an absorber reactor 10 which receives a quantity of reagent 11, such as soda ash, from a reagent dissolving tank 12. Thiosulphate 18 and SO₂ are removed from the reaction product produced by the absorber 10, by evaporators 16. At least one of the evaporators 16 separates thiosulphate 18 from the reaction product and provides it to the dissolving tank 12. A sulphate crystallizer 20 is also used to separate sulphate 22 from the reaction product.

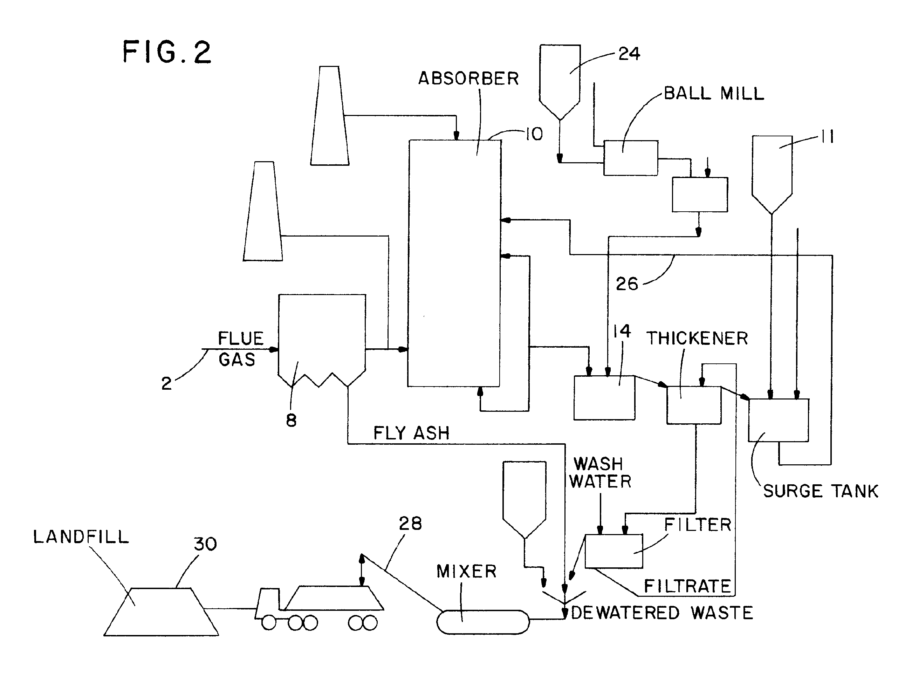

The same reference numerals are used to indicate the same or similar features or elements in Figure 2 which illustrates a dual-alkali system utilizing a limestone source 24 and a soda ash source 11 which are used in conjunction with a reaction tank 14 providing reagent to the absorber 10. A regeneration return 26 is used to channel regenerated reagent back into the absorber 10. A by-product of this system is sludge 28, which is removed from the system and provided to a landfill 30.

Most of these regeneration processes, such as those listed above, are currently practiced at the adiabatic saturation temperature as the gas is cooled from about 150°C (300°F), or in a range 120-205°C (250-400°F), to about 50°C (125°F), or in a range 45-65°C (110-150°F). The absorption of SO₂ is dependent upon vapour liquid concentration at that temperature. Therefore, lowering the temperature results in higher absorption of SO₂.

In addition, gas cooling in a condensing heat exchanger system has a significant beneficial effect on the steam requirements in the stripping process when scrubbing the gas below saturation temperatures. The reduced scrubbing temperature results in lower H₂O concentration in the flue gas and therefore reduces the ratio of H₂O/SO₂ vapour pressure in solution from the absorber.

Gas cooling also enhances the SO₂ mass transfer. Absorber cooling from 55°C (131°F) for example to 35°C (95°F) will reduce steam requirements of the steam stripper by almost a factor of three. In the regeneration step, the solution evaporates crystallizing sodium sulphite in one stage only in a SO₂ stripping operation. Heat recovery from other overhead product SO₂ includes the condensation of water. Heat recovery from the condenser can result in substantial energy savings. It was reported that, with process alternatives for stack gas desulphurization with steam regeneration to produce SO₂, by G.T Rochelle, University of Texas EPA Symposium FGD, Nov. 1977, at atmospheric pressure, 90% of the water in the steam stripper can be condensed at about 95°C (200°F).

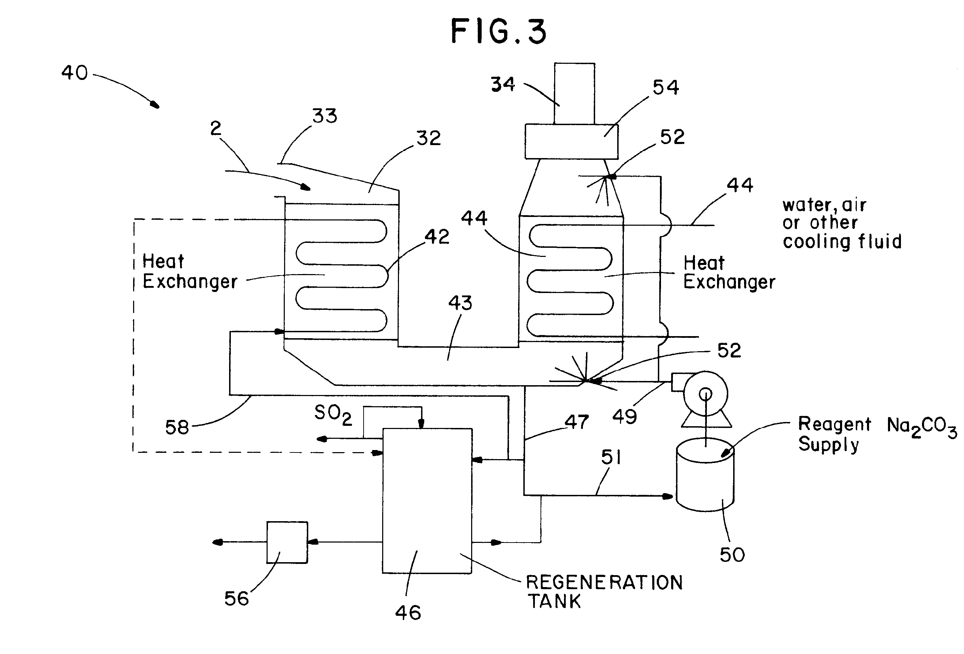

As shown in Figure 3, an embodiment of the present invention comprises a combined regenerative scrubber and condensing heat exchanger system 40 which removes SO₂ from flue gas 2 while drawing heat from the flue gas so as to cool the flue gas.

The flue gas 2 is channelled in an inlet 33 of a housing 32 wherein the flue gas 2 is channelled downwardly through a first condensing heat exchanger 42 which cools the flue gas just above the dew point. The flue gas 2 is then channelled through a transition section 43 which leads to a second heat exchanger 44. The flue gas 2 reaches its saturation point as it flows from the transition section 43 upwardly through the second heat exchanger 44 which provides a further cooling of the flue gas 2. At the second heat exchanger 44, a scrubbing solution 49 consisting of make-up reagent 48, regenerated reagent 51 and a reaction product stream 47 is sprayed on top of the second heat exchanger 44, namely on top of the Teflon (registered trade mark) heat exchanger tubes, which also performs as a scrubbing contact surface. As the flue gas 2 cools, condensation occurs on submicron size particulates which enhances their removal. The make-up reagent 48 is provided to a scrubbing solution supply tank 50 in which it is mixed to form the scrubbing solution 49 which is pumped to sprayers 52 located at various locations within the housing 32. The atomized sprays, which contain recycled reaction products and the alkaline make-up reagent 48, sprayed by the spray devices 52, ensure the required SO₂ removal from the flue gas 2 along with fine particulate and condensed vapour removal.

The heat exchanger 44 utilizes a cooling medium 41, such as a cooling fluid, water, air or other suitable cooling means. After the reagent spray devices 52 have sprayed the flue gas 2 so as to remove SO₂ from the flue gas 2 by creating a reaction product, as well as spraying the second heat exchanger 44, the flue gas 2 is channelled through a mist eliminator 54 which demistifies the flue gas 2 prior to exiting the housing 32 through an outlet 34. An effluent stream 58 consisting of any excess reagent and reaction products can be provided through the first heat exchanger 42 as the cooling medium, or sent directly to a regeneration tank 46.

The regeneration tank 46 is used in conjunction with an alkali reclamation device 56 in order to recover the reagent 48 from the reaction product as well as separate SO₂ from the reaction product.

Since heat is removed in both the first and second stage heat exchangers 42 and 44, the liquid to gas reactions, such as those previously mentioned, occur below the adiabatic saturation temperature. Since SO₂ solubility increases with lower temperature, the SO₂ removal increases for the same chemical conditions. Alternatively, the SO₂ removal can be held constant by allowing the chemistry, such as the pH and HSO₃⁻ concentration, to change. This drives the reaction to the right hand side for both cases, thereby reducing the heat requirements of Reaction 3 and promoting Reactions 4 and 5 for dual alkali.

The scrubbing solution 48 is provided either directly through the first heat exchanger 42 or indirectly through a heating loop which allows for heat to be recovered from the flue gas 2 and is used as a pre-heating means for the effluent stream to the regeneration tank 46. This significantly reduces the heat input requirements for regeneration and/or promotes dual-alkali reactions.

The alkaline reagents used may include: sodium carbonate, sodium sulphite, magnesium oxide, potassium oxide, sodium hydroxide, magnesium sulphite, ammonium hydroxide, and other soluble alkali compounds, and dibasic acid, formic acid, and other aqueous buffers. Organic reagents such as amines, and citric acid can also be used wherein they are regenerated by steam stripping and reused. Double alkali systems using sodium scrubbing and regenerating such as with lime or limestone are other alternatives.

The regeneration could also be accomplished by an electrolyzing process as disclosed in US Patent No. US-A-5 098 532 (Thompson et al). In this process, ammonium sulphate and sodium hydroxide are produced from an aqueous sodium sulphate solution. The present technique allows for adjusting the temperature and concentration of the electrolyzing process for optimization.

There are many advantages to the present technique which include: high SO₂ removal efficiency, typically 90-98% or greater, that is accomplished with low energy consumption (low UG, low steam consumption for SO₂ stripping); the process is easy to adopt for industrial scale units for producing marketable by-products such as SO₂ or H₂SO₄; landfilling is not required (except for dual-alkali without gypsum production); there is also low water concentration in the exit gas which reduces visible plume; the second stage heat exchanger also acts as a mass transfer device; the make-up water requirement is low as the condensate from the first stage condensing heat exchanger can be used for the scrubber; the stack height requirement is minimized for low pollution emission dispersion; the scrubber tower cost is minimum as the corrosion resistant material is already used in the heat exchanger surface; the wet/dry interface problem is reduced compared to conventional scrubber designs; no scaling of gypsum and minimum erosion is encountered in the scrubber system; the present technique also can be used with several readily available reagents; dual-alkali reaction rates are increased; the heat recovery provided decreases the operating costs; saleable by-products are produced, e.g. SO₂, H₂SO₄, ammonium sulphate, gypsum; some latent heat as well as sensible heat is recovered from the process which increases fuel efficiency; and there is low reagent cost due to regeneration.

## Claims

1. A system for removing sulphur dioxide from a flue gas, the system comprising:
a housing (32) having an inlet (33) and an outlet (34) for channelling the flue gas (2) into and out of the housing (32);
first heat exchanger means (42) in the housing (32) near the inlet (33) for contacting a downward flow of the flue gas (2) in order to cool the flue gas;
second heat exchange means (44) in the housing (32) near the outlet (34) for contacting an upward flow of the flue gas (2) in order to further cool the flue gas;
reagent scrubbing means (52) for removing sulphur dioxide from the flue gas (2) with a reagent (49) in order to form a reaction product (47); and
regeneration means (46) for regenerating the reagent (51) from the reaction product (47) for use in the reagent scrubbing means (52) and for recovering the sulphur dioxide from the reaction product (47).

2. A system according to claim 1, wherein the first and second heat exchanger means (42,44) include a cooling fluid.

3. A system according to claim 2, wherein an effluent stream (58) is used as the cooling fluid in the first heat exchanger means (42).

4. A system according to claim 1, claim 2 or claim 3, wherein the reagent (49) comprises sodium carbonate, sodium hydroxide or other soluble alkali compounds.

5. A system according to claim 4, wherein the reagent (49) is regenerated by an electrolyzing process.

6. A system according to claim 1, claim 2 or claim 3, wherein the reagent (49) is an aqueous buffer.

7. A system according to claim 1, claim 2 or claim 3, wherein the reagent (49) is organic.

8. A system according to any one of the preceding claims, including a mist elimination means (54) near the outlet (34) for removing mist from the flue gas (2).

9. A system according to any one of the preceding claims, including a transition section (43) between the first and second heat exchanger means (42,44) for channelling the flue gas (2) from the first heat exchanger means (42) to the second heat exchanger means (44).

10. A system according to any one of the preceding claims, wherein the reagent scrubbing means (52) provides reagent on at least one of the heat exchanger means (44).

11. A method of removing sulphur dioxide from a flue gas, the method comprising the steps of:
providing a housing (32) having an inlet (33) and an outlet (34);
channelling the flue gas (2) into the housing (32) through the inlet (33);
downwardly channelling the flue gas (2) to the housing (32) near first heat exchanger means (42) for cooling the flue gas;
upwardly channelling the flue gas (2) in the housing (32) near second heat exchanger means (44) for further cooling the flue gas;
providing a reagent (49) to the flue gas (2) in the housing (32) for removing sulphur dioxide from the flue gas by forming a reaction product (47);
providing the reagent (49) to at least one of the heat exchanger means (44);
regenerating the reagent (51) from the reaction product (47);
recovering the sulphur dioxide as a by-product; and
channelling the flue gas (2) through the outlet (34).
